# EUROPÄISCHE PATENTSCHRIFT

(11) **EP 4 304 325 B1**
(45) Veröffentlichungstag und Bekanntmachung des Hinweises auf die Patenterteilung: **23.09.2026**
(21) Anmeldenummer: 22714375.7
(22) Anmeldetag: 09.03.2022
(51) Int. Cl.: A01D 17/00, B65G 43/08

(54) **VERFAHREN ZUM BETRIEB EINER HACKFRUCHTFÖRDERMASCHINE**
METHOD FOR OPERATING A ROOT CROP CONVEYING MACHINE
PROCÉDÉ DE FONCTIONNEMENT D'UNE MACHINE DE TRANSPORT DE PLANTES SARCLÉES

(30) Priorität: 12.03.2021 DE 102021106119
(43) Veröffentlichungstag der Anmeldung: 17.01.2024
(60) Teilanmeldung: 26200002.9
(73) Patentinhaber: Grimme Landmaschinenfabrik SE & Co. KG, 49104 Damme (DE)
(72) Erfinder: STROTHMANN, Wolfram, 49078 Osnabrück (DE); ROß, Julian, 59889 Eslohe (DE)
(74) Vertreter: Wischmeyer, André
(86) Internationale Anmeldenummer: PCT/EP2022/056103
(87) Internationale Veröffentlichungsnummer: WO 2022/189537

(56) Entgegenhaltungen:
- EP-A1- 3 785 516
- WO-A1-2018/035082
- DE-A1- 102018 127 844
- DE-A1- 19 804 147
- DE-A1- 2 319 721
- MOLEMA G.J. ET AL: "Aardappelopbrengst meten met beeldverwerking kan", LANDBOUWMECHANISATIE, 1 April 2003 (2003-04-01), pages 28 - 29, XP055847537, Retrieved from the Internet <URL:https://edepot.wur.nl/494422> [retrieved on 20211005]
- "Potatoes: Production, Consumption and Health Benefits", 1 January 2012, NOVA SCIENCE PUBLISHERS, article CLAUDIO CAPRARA ET AL: "Improving the conditions of potato production by the automation of potato harvesting tasks using machine vision", pages: 83 - 97, XP055847559

## Beschreibung

Die Erfindung betrifft ein Verfahren zum Betrieb einer Hackfruchtfördermaschine, insbesondere einer Hackfruchterntemaschine, und eine Hackfruchtfördermaschine, insbesondere eine Hackfruchterntemaschine. Gemäß dem Verfahren werden Sensordaten mittels zumindest eines optischen Sensors aufgenommen. Der optische Sensor ist auf einen Messbereich eines Stroms von Erntegut gerichtet, der durch zumindest ein Förderelement in eine Förderrichtung gefördert wird. Anhand der Sensordaten werden durch eine Auswertevorrichtung Massendaten berechnet, die zumindest eine Masse zumindest eines Teils des Erntegutes kennzeichnen. Durch die Auswertevorrichtung werden zumindest auf Basis der Massendaten Ertragsdaten berechnet und bereitgestellt. Die Ertragsdaten geben zumindest die Masse und/oder einen anhand der Masse berechneten Wert wieder.

Ein derartiges Verfahren dient insbesondere zur Erfassung eines Erntegutertrages während der Ernte und ist im Einzelnen aus der WO 2018 035 082 A1 bekannt. Gemäß diesem Stand der Technik ist der optische Sensor an der Hackfruchtfördermaschine angeordnet und umfasst die Ertragsdaten als Hackfruchtmasse pro geernteter Fläche. Die EP 3 785 516 A1 offenbart ein Verfahren zum Betrieb einer Hackfruchtfördermaschine

Aufgabe der vorliegenden Erfindung ist eine Erhöhung der Qualität des Erntegutes bei möglichst geringem konstruktiven Aufwand.

Erfindungsgemäß wird die Aufgabe dadurch gelöst, dass die Auswertevorrichtung zumindest auf Basis der Sensordaten, der Massendaten und/oder der Ertragsdaten ein Einstellsignal zur Einstellung zumindest eines Trennelementes erzeugt. Das Trennelement ist von einer Trennvorrichtung umfasst, die insbesondere von der Hackfruchtfördermaschine umfasst ist. Die Trennvorrichtung, insbesondere das Trennelement, ist zur Trennung eines ersten Teils des Erntegutes von mindestens einem weiteren Teil des Erntegutes ausgebildet. Das Trennelement ist im Betrieb entlang des Stroms vor oder hinter dem Messbereich angeordnet. Außerdem wirkt das Trennelement zumindest auf einen Teil des Erntegutes mechanisch ein. Bevorzugt wird das Trennelement unmittelbar durch das Einstellsignal eingestellt.

Zumindest ein Teil der zur Ertragserfassung ermittelten Daten lassen sich somit zur Einstellung der Trennvorrichtung verwenden. Das Einstellsignal ist insbesondere zur Einstellung einer Trenncharakteristik der Trennvorrichtung geeignet und bestimmt etwa über die Sensibilität der Trennvorrichtung bzw. über den Reinheitsgrad und/oder den mit seiner Erhöhung in der Praxis regelmäßig zunehmenden Anteil unbeabsichtigt getrennter, intakter Früchte. Das Einstellsignal wird im Betrieb insbesondere dauerhaft von der Auswertevorrichtung erzeugt bzw. bereitgestellt, liegt an der Trennvorrichtung an und/oder wird in Abhängigkeit von den Sensordaten variiert. Durch die erfindungsgemäße Ausgestaltung des Verfahrens lässt sich die Trennvorrichtung somit bei minimalem konstruktivem Aufwand an die Charakteristik des zu trennenden Erntegutes anpassen und die Funktion der Trennvorrichtung sich somit in Abhängigkeit des vom Betreiber gewünschten Ergebnisses optimal einstellen.

Insbesondere sind der optische Sensor, die Auswertevorrichtung und/oder die Trennvorrichtung von der Hackfruchtfördermaschine umfasst oder an dieser angeordnet. Vorzugweise lässt sich somit das erfindungsgemäße Verfahren vollständig durch eine mobile Hackfruchtfördermaschine und ggf. eine damit gekoppelte Zugmaschine durchführen.

Hackfruchtfördermaschinen unterfallen im Sinne der Erfindung auch solche Fördermaschinen, die zur Förderung von Gemüse ausgebildet oder geeignet sind. Analog unterfallen Hackfruchterntemaschinen auch solche Erntemaschinen, die zur Ernte von Gemüse ausgebildet oder geeignet sind. Hackfrüchte schließen insofern auch Gemüse, d.h. Pflanzenteile, insbesondere Knollen, Stängel und Wurzeln, ein.

Die Trennvorrichtung ist insbesondere zur Trennung von vom Erntegut umfassten Beimengungen von vom Erntegut umfassten Hackfrüchten ausgebildet. Die Trennvorrichtung umfasst neben dem Trennelement bevorzugt ein weiteres Element, das mit dem Trennelement zusammenwirkt. Das weitere Element ist insbesondere das Förderelement oder ein weiteres insbesondere zum Trennelement baugleiches Trennelement. Bevorzugt umfasst der erste Teil ausschließlich verwertbare Hackfrüchte und der weitere Teil ausschließlich Beimengungen und/oder unverwertbare Hackfrüchte, beispielsweise bestimmter Größen. Zu den Beimengungen zählen insbesondere Steine, Kluten, Kraut, Blätter sowie beschädigte Hackfrüchte, wobei die Trennvorrichtung insbesondere zur Trennung einer oder mehrerer dieser Beimengungen ausgebildet ist. Alternativ oder zusätzlich sind die Beimengungen Hackfrüchte unerwünschter Größen.

Das zumindest eine Trennelement ist insbesondere als Siebband, als geschlossenes Band, als Zupfwalze, als Igelband, als Klopfervorrichtung, als insbesondere schwenkbarer Auswerfer einer Auswerferzeile, als Roboterarm und/oder als ein sich im Betrieb von oben in das Erntegut erstreckendes Kammelement ausgebildet. Das Trennelement ist dabei bevorzugt ein vollständig vom Förderelement abweichendes Bauteil. Eine mechanische Einwirkung ist ein Einfluss von einem Körper, durch den eine Bewegung oder eine Hemmung einer Bewegung erzeugt wird. Das Trennelement wirkt insbesondere insofern mechanisch auf zumindest einen Teil des Erntegutes ein, als dieser Teil zumindest phasenweise unmittelbaren Kontakt zum Trennelement hat, d.h. dieses berührt. Die Trennvorrichtung weist insbesondere eine Mehrzahl vorzugsweise gleichartiger Trennelemente auf. Insbesondere bildet die Trennvorrichtung zumindest einen Spalt aus, der für zumindest einen Teil der Beimengungen durchlässig und für durchschnittliche Hackfrüchte undurchlässig ist. Das Trennelement erzeugt bevorzugt einen Förderimpuls in Richtung des Spaltes.

Der optische Sensor ist insbesondere als Kamera, bevorzugt als optische Kamera, besonders bevorzugt als 3D-Kamera ausgebildet. Der optische Sensor ist auf den Messbereich gerichtet, durch den im Betrieb das Förderelement mit darauf aufliegendem Erntegut verläuft. Der Messbereich ist insbesondere ortsfest zum Maschinenrahmen der Hackfruchtfördermaschine angeordnet. Der Messbereich ist insbesondere der Bereich, der von dem Sensor erfasst bzw. abgedeckt wird und/oder von dem Sensordaten aufgenommen werden, die zur Berechnung der Massendaten verwendet werden (wobei der vom Sensor erfasste Bereich über den Messbereich hinausgehen kann). Der optische Sensor erzeugt die Sensordaten und übermittelt diese kabelgebunden oder drahtlos an die Auswertevorrichtung. Bevorzugt umfasst die Hackfruchtfördermaschine genau einen Sensor.

Die Auswertevorrichtung umfasst insbesondere eine Recheneinheit bzw. einen Prozessor und/oder eine Speichereinheit und ist insbesondere zumindest teilweise von der Hackfruchtfördermaschine oder der Zugmaschine umfasst. Anhand von hinterlegten Algorithmen berechnet die Auswertevorrichtung die Massendaten unter Verwendung der Sensordaten. Die Massendaten repräsentieren bevorzugt ein Gewicht des Erntegutes bzw. eines Teils davon, insbesondere das Gewicht der Hackfrüchte. Die Massendaten werden insbesondere durch eine Multiplikation eines von der Auswertevorrichtung bestimmten Volumens mit einer Dichte berechnet. Vorzugsweise umfassen die Daten eine Mehrzahl von Gewichten bzw. Massen, die auf während unterschiedlicher Zeitintervalle aufgenommenen Sensordaten beruhen.

Die Ertragsdaten basieren zumindest auf den Massendaten. Die Ertragsdaten repräsentieren bevorzugt zumindest eine bestimmte Masse pro bestimmter, geernteter Fläche. Insbesondere umfassen die Ertragsdaten eine Mehrzahl dieser Verhältnisse.

Die Ertragsdaten werden durch die Auswertevorrichtung bereitgestellt. Die Bereitstellung erfolgt vorzugsweise zumindest visuell. Auf die Bereitstellung hin werden die Ertragsdaten bevorzugt auf einem Speichermedium abgelegt.

Zur Erzeugung des Einstellsignals sind keine Mittel notwendig, die nicht bereits zur Ertragserfassung nötig sind. Hierdurch ist der Aufwand, der zur vorbeschriebenen Optimierung des Erntegutes bzw. der zur Reinigung der Hackfrüchte nötig ist, minimal.

Das erfindungsgemäße Verfahren ist bevorzugt zum Betrieb einer Kartoffel- oder Rübenerntemaschine geeignet. Erntemaschinen zeichnen sich durch das Vorhandensein zumindest eines im Betrieb in den Erdboden eindringenden Rodeschares aus. Bevorzugt ist das Verfahren auch zum Betrieb einer Hackfruchtfördermaschine aufweisend zumindest ein Förderband insbesondere zum Einlagern der Hackfrüchte geeignet. Alternativ oder zusätzlich ist das Verfahren zum Betrieb einer stationären oder mobilen Hackfruchtreinigungsmaschine geeignet.

Die Betriebsparameter bzw. der Betrieb der Trennvorrichtung ist insbesondere abhängig vom Einstellsignal. Vorzugsweise ist die Einstellung der Trennvorrichtung weiterhin abhängig von vom Anwender vorzunehmenden Eingabegrößen wie z.B. einer Hackfruchtsorte oder einer Mindestreinheit des Erntegutes nach Durchlaufen der Trennvorrichtung. Alternativ oder zusätzlich zur Reinigung des Erntegutes kann die Trennvorrichtung zur Größensortierung der Hackfrüchte ausgebildet sein.

Die Auswertevorrichtung ist insbesondere derart ausgebildet, dass sie im Falle ausbleibenden Erntegutes auf dem Förderelement eine Kalibrierung vornimmt. Hierbei wird insbesondere ein Förderniveau des Förderelementes erkannt, das sich im Betrieb durch am Förderelement anhaftende Beimengungen ändern kann und bei der Ertragserfassung zu berücksichtigen ist.

Bevorzugt benutzt die Auswertevorrichtung zur Berechnung der Massendaten und/oder zur Bereitstellung der Ertragsdaten zumindest u.a. Sensordaten desjenigen Sensors, dessen Sensordaten die Auswertevorrichtung auch zur Erzeugung des Einstellsignals benutzt. Das bedeutet, bei Anwendung nur eines optischen Sensors, dass das Einstellsignal und die Ertragsdaten auf den vom selben Sensor aufgenommenen Sensordaten beruhen. Bei Anwendung einer Mehrzahl von optischen Sensoren bedeutet das, dass zumindest die Sensordaten eines der Sensoren sowohl der Erzeugung des Einstellsignals als auch der Berechnung der genannten Daten zugrunde liegt. Hierdurch wird sichergestellt, dass sowohl das Einstellsignal als auch die Ertragsdaten auf der bestmöglichen Datenbasis beruhen und eine konstruktiv besonders einfache Lösung zum Erreichen der vorbeschriebenen Vorteile erreicht. Bestmöglich werden diese erreicht, wenn die Auswertevorrichtung sowohl zur Erzeugung des Einstellsignals auch zur Berechnung der Ertragsdaten auf dieselben Sensordaten zugreift.

Vorzugsweise unterscheidet die Auswertevorrichtung zur Berechnung der Massen- und/oder Ertragsdaten und zur Erzeugung des Einstellsignals vom Erntegut umfasste Hackfrüchte und zumindest einen Teil von vom Erntegut umfassten Beimengungen. Die Auswertevorrichtung identifiziert auf Basis der Sensordaten zumindest einen Teil der Hackfrüchte und/oder zumindest einen Teil der Beimengungen, insbesondere sowohl die Hackfrüchte als auch zumindest einen Teil der Beimengungen.

Vorzugsweise werden anhand der Sensordaten die Konturen einzelner Hackfrüchte und/oder Beimengungen in zumindest einem Kamerabild des Sensors identifiziert. Als Kamerabild wird eine vom Sensor ausgegebene Datei, insbesondere ein Rohbild, verstanden, die zumindest in etwa zum gleichen Zeitpunkt gesammelte Informationen enthält und die visuelle Situation aus der Perspektive des Sensors repräsentiert. Insbesondere liegt jedem Kamerabild genau eine Datei der Sensordaten zugrunde bzw. wird jedes Kamerabild durch genau eine Datei repräsentiert. Insbesondere umfasst die Datei bzw. das Kamerabild Informationen zu Auflösung, Helligkeit etc. Die Konturen werden insbesondere mit hinterlegten Referenzkonturverläufen abgeglichen. Anhand von hinterlegten Daten insbesondere betreffend typische Größen und/oder Formen der Hackfrüchte wird anschließend bevorzugt das Volumen der Hackfrüchte ermittelt und anhand dessen besonders bevorzugt ihre Masse berechnet.

Alternativ oder zusätzlich werden die Form und/oder die Lage von vom Sensor aus sichtbaren Oberflächenabschnitten der Hackfrüchte bzw. Beimengungen identifiziert. Insbesondere berechnet die Auswertevorrichtung zumindest einen Anteil der Hackfrüchte am Erntegut und/oder zumindest einen Anteil der Beimengungen am Erntegut. Hierdurch lässt sich die Qualität bzw. der Reinheitsgrad des Erntegutes feststellen und abhängig davon die Trennvorrichtung einstellen.

**In** einer vorteilhaften Ausgestaltung der Erfindung berechnet die Auswertevorrichtung zumindest anhand der Sensordaten zumindest eine Anzahl von vom Erntegut umfassten Hackfrüchten. Hierzu werden wiederum bevorzugt die Konturen der einzelnen Hackfrüchte festgestellt. Insbesondere unter Berücksichtigung der Massendaten kann durch die Anzahl auf eine Größenverteilung der Hackfrüchte geschlossen werden und die Trennvorrichtung entsprechend eingestellt werden. Alternativ oder zusätzlich berechnet die Auswertevorrichtung zumindest ein Maß zumindest eines Teils der Hackfrüchte. Das Maß ist insbesondere eine Länge, Breite, Höhe, Ausrichtung oder ein Volumen und insbesondere unmittelbar zur Einstellung der Trennvorrichtung verwendbar.

Vorzugsweise erzeugt die Auswertevorrichtung das Einstellsignal in Abhängigkeit von Eigenschaftsdaten, insbesondere Größendaten, und/oder einer Eigenschaftsverteilung, insbesondere Größenverteilung, der Hackfrüchte. Die Eigenschaftsverteilung wird anhand der Sensordaten berechnet. Die Eigenschaftsdaten kennzeichnen eine Eigenschaft zumindest eines Bestandteils des Erntegutes wie einer Hackfrucht und werden anhand der Sensordaten berechnet. Die Größendaten kennzeichnen eine Größe zumindest einer Hackfrucht und werden anhand der Sensordaten berechnet.

Bevorzugt berechnet die Auswertevorrichtung die Ertragsdaten zumindest durch eine Zuordnung zumindest eines Teils der Eigenschaftsdaten bzw. Größendaten oder darauf basierenden Daten oder der Eigenschaftsverteilung bzw. Größenverteilung oder darauf basierenden Daten zu Lagedaten oder Chargendaten. Die Lagedaten sind insbesondere mittels eines GPS-Sensors ermittelt, der bevorzugt an der Hackfruchtfördermaschine angeordnet ist. Durch diese Zuordnung kann der Absatz eingelagerter Hackfrüchte besser geplant werden, da die unterschiedlichen Qualitäts- bzw. Größenkategorien zielgerichtet zu lokalisieren und abzusetzen sind.

Bevorzugt berechnet die Auswertevorrichtung die Ertragsdaten zumindest durch eine Zuordnung zumindest eines Teils der Massendaten oder darauf basierenden Daten zu Lagedaten oder Chargendaten. Auf die Zuordnung hin gibt die Auswertevorrichtung bevorzugt aus, wie groß der Ertrag auf zumindest einem bestimmten Teil einer Ackerfläche ist. Chargendaten kennzeichnen insbesondere einen solchen Teil des Erntegutes, der räumlich gesammelt verarbeitet, von einem übereinstimmenden Transportfahrzeug transportiert wird und/oder innerhalb desselben Behälters eingelagert wird. Durch die Zuordnung der Massendaten zu den Chargendaten können die in den Massendaten enthaltenen Informationen konkret einer jeden Charge zugeordnet werden und die Reihenfolge der Auslagerung der Chargen etwa anhand von die Qualität der Hackfrüchte betreffenden Ertrags- oder Chargendaten bestimmt werden.

Besonders bevorzugt bildet die Auswertevorrichtung eine Ackerfläche, auf der die Hackfruchtfördermaschine eingesetzt wird, auf Basis der Lagedaten virtuell nach. Außerdem unterteilt die Auswertevorrichtung die virtuell nachgebildete Ackerfläche in Flächensektionen, die insbesondere zumindest überwiegend gleich groß sind. Insbesondere sind all diejenigen Flächensektionen gleich groß, welche nicht an eine Außenkontur der virtuell nachgebildeten Ackerfläche angrenzen. Die Auswertevorrichtung ordnet bevorzugt jeder Flächensektion zumindest einen Teil der Massendaten oder darauf basierende Daten zu. So kann nicht nur der Ertrag der Ackerfläche festgestellt und durch eine GPS-basierte Ackerflächenidentifikation automatisch zugeordnet werden, sondern alternativ oder zusätzlich die Massendaten auch lokal hoch aufgelöst werden.

Vorzugsweise wird der Strom von Erntegut im Messbereich mittels zumindest einer Laservorrichtung zumindest im Wesentlichen entlang einer Linie mit Laserlicht bestrahlt. Die Haupterstreckungsrichtung der Linie ist dabei insbesondere angewinkelt, bevorzugt rechtwinklig zur Förderrichtung angeordnet. Aufgrund der in aus mehreren Erntegutbestandteilen zusammengesetzten und in der Praxis unebenen Oberfläche, auf die das Laserlicht auftrifft, ergibt sich ein in der Höhe variierendes Linienprofil. Das Linienprofil, insbesondere seine zeitliche Entwicklung, ist insbesondere Grundlage der Konturenidentifizierung. Der Sensor nimmt vom Strom gestreutes und/oder reflektiertes Licht der Laservorrichtung auf bzw. misst deren Intensität bevorzugt mit einer hohen Auflösung. Die Laservorrichtung umfasst insbesondere eine Laserlichtquelle und ist bevorzugt als Linienlaser ausgebildet. Durch die Messung des gestreuten und/oder reflektierten Lichts lässt sich die Oberflächenstruktur des Erntegutes besonders zuverlässig ermitteln. Insbesondere lassen sich Fehlstellen, Beschädigungen, ein Erdbodenbelag sowie eine Struktur der Hackfrüchte so feststellen.

In einer vorteilhaften Ausgestaltung der Erfindung wird der Strom mittels der Laservorrichtung zumindest im Wesentlichen entlang zumindest zweier Linien mit Laserlicht bestrahlt. Die Linien verlaufen in einem Abschnitt einer gedachten Förderebene, dessen Größe der von dem Förderelement bereitgestellten Auflagefläche entspricht, bevorzugt so, dass sie sich nicht schneiden. Besonders bevorzugt verlaufen die Linien parallel. In diesem Fall umfasst die Laservorrichtung bevorzugt zumindest zwei Laserlichtquellen. Die Haupterstreckungsrichtungen der Linien sind jeweils angewinkelt, bevorzugt rechtwinklig, zur Förderrichtung angeordnet. Hierdurch lassen sich die vorgenannten Eigenschaften entlang zweier Linien feststellen. Vorzugsweise wird der Strom mittels der Laservorrichtung zumindest im Wesentlichen entlang zumindest dreier Linien mit Laserlicht bestrahlt, die wie vorbeschrieben zueinander orientiert sind.

Bevorzugt identifiziert die Auswertevorrichtung anhand von Sensordaten, die einem ersten Kamerabild zugrunde liegen, und von Sensordaten, die zumindest einem zweiten Kamerabild zugrunde liegen, zumindest einen Bildabschnitt zumindest eines der Kamerabilder, der zumindest einen Teil eines Hintergrundes zeigt. Die Kamerabilder werden bevorzugt vom selben Sensor nacheinander aufgenommen. Die Kamerabilder zeigen somit weitgehend die gleichen Elemente. Anschließend werden die mindestens zwei Kamerabilder bzw. die ihnen zugrunde liegenden Sensordaten bevorzugt miteinander verrechnet und die Bilder optisch voneinander subtrahiert. Insbesondere modifiziert die Auswertevorrichtung zumindest einen Teil der Sensordaten derart, dass der Bildabschnitt zumindest teilweise aus dem Kamerabild entfernt wird. Vorzugsweise identifiziert die Auswertevorrichtung den zumindest einen Bildabschnitt zumindest unter anderem anhand von eine Wegstrecke wiedergebenden Wegdaten. Die Wegstrecke ist dabei diejenige Strecke, die das Förderelement zwischen den Aufnahmen der beiden Kamerabilder in die Förderrichtung zurückgelegt hat. Die Wegstrecke wird bevorzugt über einen Drehgeber am Förderelement ermittelt. Eines der Kamerabilder wird die Wegstrecke bei der Verrechnung insbesondere optisch zurückgeschoben. Da die parallelen Linien ortsfest relativ zum optischen Sensor sind, bleiben im sich ergebenen Differenzbild nur noch die durch die Laservorrichtung erkennbar gemachten Bildstrukturen erhalten. Auf deren Basis lassen sich unterschiedliche Grauwerte bzw. Reflektionseigenschaften besonders zuverlässig feststellen. Durch diese bevorzugten Merkmale lassen die die vorbeschriebenen Sensordaten zielgerichteter verrechnen. Insgesamt lässt sich somit die Datengrundlage auf relevante Teile konzentrieren.

Besonders bevorzugt wird der Strom entlang einer ersten der Linien mit Laserlicht einer ersten Wellenlänge und entlang einer zweiten der Linien mit Laserlicht einer von der ersten Wellenlänge abweichenden, zweiten Wellenlänge bestrahlt. Beide Wellenlängen sind insbesondere >= 400 nm und/oder <= 1.000 nm. Durch die unterschiedlichen Wellenlängen lassen sich unterschiedliche Eigenschaften des Erntegutes leichter feststellen und somit eine fundiertere Datenbasis zur Erzeugung des Einstellsignals erreichen. Die Zahl der unterschiedlichen Wellenlängen stimmt insbesondere mit der Zahl der Linien überein.

Vorzugsweise weist der optische Sensor zumindest eine monochrome Kamera auf. Die Sensordaten umfassen insbesondere Grauwerte und/oder Tiefeninformationen. Durch die Verwendung einer monochromen Kamera, die bevorzugt lediglich eine Helligkeitsinformation bzw. einen Grauwert pro Pixel aufzeichnet, lassen sich unnötige Datenmengen vermeiden und sämtliche relevanten Informationen insbesondere auf Basis der Verwendung des vorbeschriebenen Laserlichtes gewinnen. Durch die Verwendung der Tiefeninformationen lassen sich zusätzliche Informationen hinsichtlich der Form sowie der Lage des Erntegutes auf dem Förderelement gewinnen.

Die von der Auswertevorrichtung vorgenommene Unterscheidung zumindest einer Hackfrucht von einer Beimengung erfolgt bevorzugt zumindest anhand eines Ausmaßes einer Reflektion und/oder einer Rückstreuung des Laserlichts durch die jeweiligen, abgebildeten Oberflächen. Die Rückstreuung wird dabei entscheidend davon beeinflusst, wie tief das Licht in den jeweiligen Bestandteil eindringt und wie es innerhalb des Bestandteils streut. Insbesondere werden hierzu die Grauwerte der unterschiedlichen Pixel verglichen und vorzugsweise Helligkeitsgradienten entlang einer zu der Linie bzw. den Linien angewinkelten Richtung verglichen.

Die Trennvorrichtung ist relativ zum Messbereich und bezogen auf den Strom von Erntegut bevorzugt stromabwärts angeordnet. Insbesondere ist die Trennvorrichtung dabei zur Trennung von Beimengungen von den Hackfrüchten ausgebildet. Durch diese Anordnung der Trennvorrichtung lässt sich diese durch das Einstellsignal auch auf kurzfristige Änderungen der Zusammensetzung des Erntegutes einstellen. Bevorzugt umfasst die Hackfruchtfördermaschine zumindest einen weiteren optischen Sensor stromabwärts der Trennvorrichtung, der weitere Sensordaten zur Kontrolle des Trennergebnisses aufnimmt. Hierdurch lässt sich die Trennvorrichtung besonders effektiv einstellen.

Bevorzugt erzeugt die Auswertevorrichtung das Einstellsignal in Abhängigkeit von einer Position des identifizierten und zu trennenden Bestandteils, insbesondere einer Beimengung, des Erntegutes bezogen auf eine Querrichtung. Die Querrichtung verläuft horizontal und rechtwinklig zur Förderrichtung. So kann der Bestandteil gezielt aus vom restlichen Erntegut getrennt werden, ohne in entlang der Querrichtung versetzten Bereichen unnötigen Ausschuss zu erzeugen. Insbesondere lässt sich auf Basis des Einstellsignals das zumindest eine Trennelement nur lokal bewegen oder lokal stärker als andernorts bewegen.

Vorzugsweise ist das Einstellsignal oder deren Änderung abhängig von einer Fördergeschwindigkeit des Förderelementes. Insbesondere bei einer Abhängigkeit des Einstellsignals von einzelnen, zu identifizierenden Erntegutbestandteilen berechnet die Auswertevorrichtung bevorzugt den Zeitpunkt, zu dem ein identifizierter Erntegutbestandteil das Trennelement erreicht, um bis dahin die Konfiguration des Trennelementes anzupassen. Bevorzugt ist die Trägheit, mit der die Auswertevorrichtung in Form des Einstellsignals auf unterschiedliche Erntegutmengen, Hackfrucht-Beimengung-Verhältnisse oder dergleichen reagiert, einstellbar.

Besonders bevorzugt sind durch das Einstellsignal mehrere in Förderrichtung betrachte nebeneinander angeordnete und als Auswerferelemente ausgebildete

Trennelemente der Trennvorrichtung aktivierbar. Eine Aktivierung eines der Auswerferelemente ist dabei insbesondere von einer Position eines identifizierten und zu trennenden Bestandteils, insbesondere einer Beimengung, des Erntegutes bezogen auf die Querrichtung abhängig. Die Trennvorrichtung weist insbesondere zumindest fünf über die Breite des Förderelementes verteilt angeordnete Auswerferelemente auf, welche zur Einwirkung auf zumindest einen Teil des Erntegutes insbesondere im Bereich einer Fallstufe ausgebildet sind. Durch die Verwendung einer solchen Trennvorrichtung lässt sich die Trennung besonders effektiv umsetzten.

Gemäß der Erfindung wird die Position einer von der Trennvorrichtung umfassten Trennkante, die insbesondere von dem Trennelement ausgebildet ist, zur Trennung von Hackfrüchten und Beimengungen durch das Einstellsignal eingestellt. Die Trennkante ist insbesondere auf eine vertikale Richtung bezogen unterhalb der Auswerferelemente angeordnet. Die Trennkante ist optional im Betrieb umlaufend ausgebildet. Die Trennkante dient insbesondere dazu, die Teile des Erntegutes in Abhängigkeit von ihren Flugeigenschaften innerhalb der Fallstufe bzw. einer Einwirkung eines Auswerferelementes innerhalb der Fallstufe unterschiedlichen Teilströmen zuzuleiten. Eine solche Ausbildung der Trennvorrichtung hat sich im Bereich der Hackfrüchte als besonders effektiv erwiesen.

Die Auswertevorrichtung berechnet die Ertragsdaten bevorzugt zumindest auf Basis von Betriebskenndaten der Hackfruchtfördermaschine, insbesondere auf Basis von einer Fahrgeschwindigkeit und/oder einer Position von Rodescharen der Hackfruchtfördermaschine. Insbesondere bei Abwesenheit eines GPS-Sensors kann die Fahrgeschwindigkeit eine belastbare Ertragsangabe in Abhängigkeit vom geernteten Flächenabschnitt ermittelt werden. Die Position der Rodeschare dient dabei vorzugsweise zur Unterscheidung eines inaktiven Status der Hackfruchtfördermaschine von einem aktiven Status.

Das Förderelement bildet bevorzugt eine Mehrzahl von zumindest abschnittsweise tiefergelegenen Hackfruchtaufnahmebereichen aus, die sowohl in die Förderrichtung als auch in die dazu orthogonale Querrichtung durch Längs- und Quertrennelemente des Förderelementes voneinander abgegrenzt sind. Insbesondere weist das Förderelement sowohl sich in die Querrichtung erstreckende als auch sich in die Förderrichtung erstreckende Barriereelemente auf, die ein Übertreten der Hackfrüchte von einem Hackfruchtaufnahmebereich in einen weiteren Hackfruchtaufnahmebereich verhindern. Hierdurch lassen sich die unterschiedlichen Erntegutbestandteile einfacher voneinander unterscheiden und insbesondere bei Anwendung der Auswerferelemente gezielter trennen.

Die Aufgabe wird weiterhin gelöst durch eine Hackfruchtfördermaschine, insbesondere eine Hackfruchterntemaschine, die zumindest ein Förderelement, zumindest einen optischen Sensor du eine Auswertevorrichtung aufweist. Erfindungsgemäß ist die Hackfruchtfördermaschine zur Durchführung des vor- und/oder nachbeschriebenen Verfahrens ausgebildet. Das bedeutet insbesondere, dass sie eine Trennvorrichtung mit einem Trennelement umfasst.

Die Hackfruchtfördermaschine ist bevorzugt als Kartoffelerntemaschine oder als Rübenerntemaschine ausgebildet. Die Hackfruchtfördermaschine weist bevorzugt zumindest eine im Betrieb in den Erdboden ragenden Rodeschar auf. Der Rodeschar ist insbesondere derart ausgebildet, dass im Betrieb die Knollen aus dem Erdboden angehoben werden und anschließend von umlaufenden Förderelementen, insbesondere Siebbändern, von dem Rodeschar abgefördert werden. Insbesondere sind stromabwärts des Rodeschares mehrere aneinander anschließende Förderelemente angeordnet und bevorzugt ein Bunker zum Bevorraten der Knollen angeordnet, in die der Strom des Erntegutes im Betrieb mündet, bis er Bunker entleert wird.

Vorzugsweise umfasst die Hackfruchtfördermaschine eine Mehrzahl optischer Sensoren, die auf unterschiedliche und sich insbesondere nicht überschneidende Messbereiche, insbesondere Förderelemente gerichtet sind. Bevorzugt weist die Hackfruchtfördervorrichtung auch eine Mehrzahl von insbesondere unterschiedlichen Trennvorrichtungen auf, für die unterschiedliche Einstellsignale erzeugt werden. Bevorzugt basiert das Einstellsignal einer jeden Trennvorrichtung auf den Sensordaten genau eines Sensors oder auf Sensordaten mehrerer Sensoren.

Die Hackfruchtfördermaschine ist insbesondere als stationär arbeitende oder mobil zu betreibende Maschine ausgebildet. Vorzugsweise handelt es sich um eine Überlade- oder Reinigungsmaschine. Insbesondere umfasst die Hackfruchtfördermaschine ein Fahrwerk.

Weitere Einzelheiten und Vorteile der Erfindung sind den nachfolgend beschriebenen schematisch dargestellten Ausführungsbeispielen zu entnehmen; es zeigen:
- Fig. 1: eine Seitenansicht einer erfindungsgemäßen Hackfruchterntemaschine,
- Fig. 2: eine schematische Darstellung eines ersten Förderelementes mit einem optischen Sensor,
- Fig. 3a - 4b: schematische Darstellungen eines zweiten Förderelementes mit einem optischen Sensor,
- Fig. 5: ein vom optischen Sensor aufgenommenes Bild in schematischer Darstellung,
- Fig. 6: eine schematische Darstellung einer Trennvorrichtung,
- Fig. 7: einen schematischen Ablaufplan einer Ausführungsform eines erfindungsgemäßen Verfahrens.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll sind funktional gleichwirkende Teile mit identischen Bezugsziffern versehen.

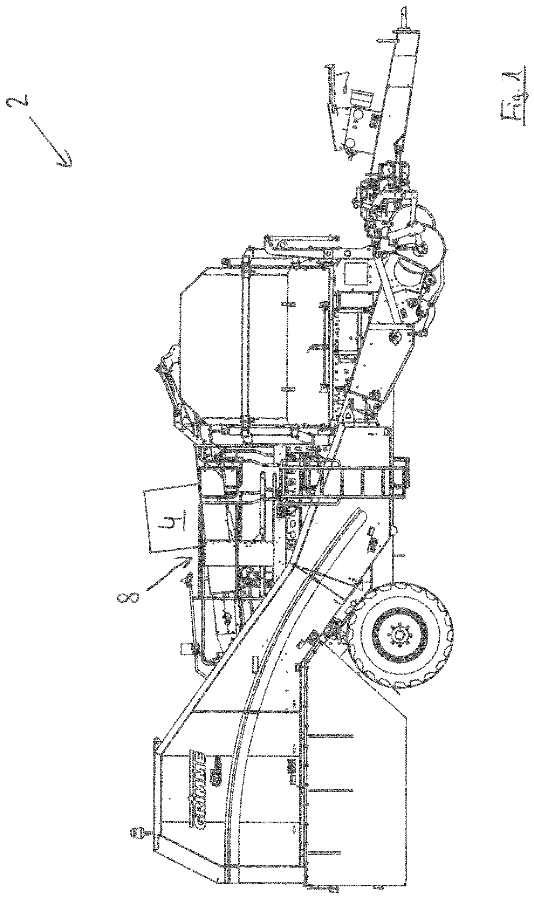

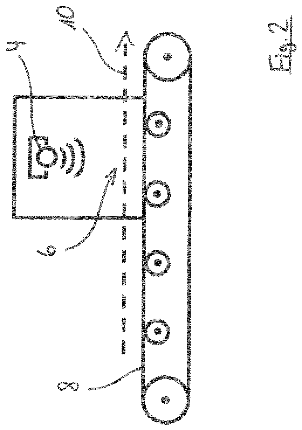

Das erfindungsgemäße Verfahren wird insbesondere auf eine Hackfruchterntemaschine 2 gemäß Fig. 1 eingesetzt. Die Hackfruchterntemaschine 2 umfasst mehrere Förderelemente 8 sowie einen optischen Sensor 4, welcher in Fig. 1 nur schematisch dargestellt ist. Fig. 2 zeigt dasjenige Förderelement 8 der Hackfruchterntemaschine 2, oberhalb dessen der optische Sensor 4 angeordnet ist. Im Betrieb der Hackfruchterntemaschine 2 wird der dem optische Sensor 4 nähere Trum des Förderelementes 8 in die Förderrichtung 10 fortbewegt. Der optische Sensor 4 ist dabei auf einen ortsfesten Messbereich 6 gerichtet.

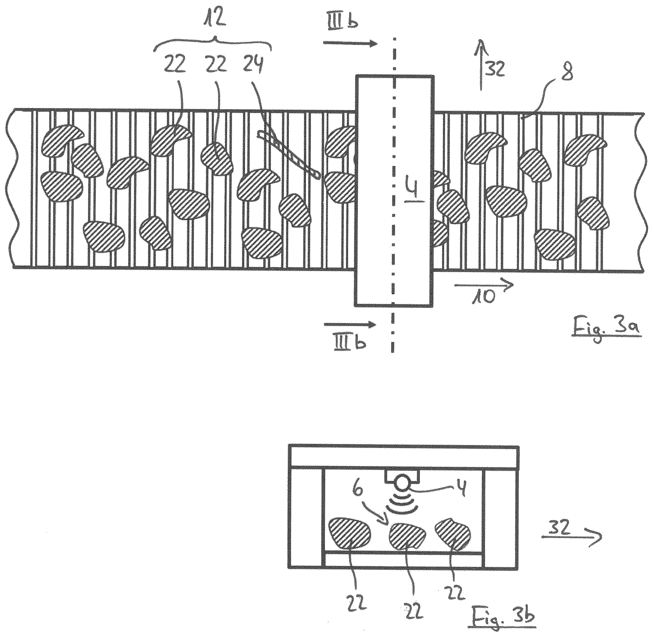

Gemäß dem erfindungsgemäßen Verfahren werden mittels des optischen Sensors 4 Sensordaten 3a, 3b aufgenommen. Der optische Sensor 4 ist dabei auf den Messbereich 6 gerichtet, durch den vom Förderelement 8 ein Strom von Erntegut 12 in die Förderrichtung 10 bewegt wird (vgl. auch Fig. 3a - 4b). Das Erntegut 12 umfasst dabei Hackfrüchte 22 sowie Beimengungen 24, wovon in Fig. 3a exemplarisch ein Krautbestandteil dargestellt ist.

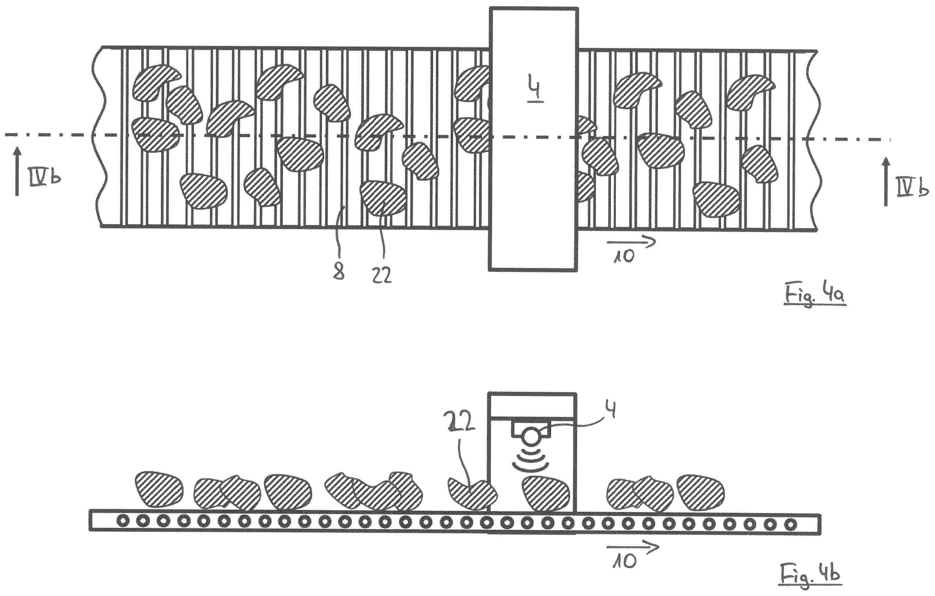

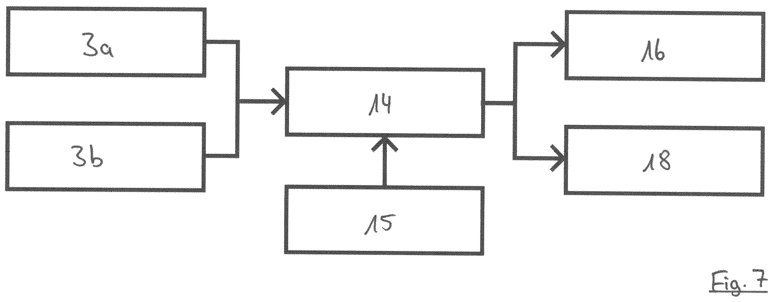

Der optische Sensor 4 ist insbesondere in einer für das Förderelement 8 in die Förderrichtung 10 offenen Einhausung angeordnet (vgl. Fig. 3b und 4b). Insbesondere umschließt diese Einhausung das Förderelement 8 auch in eine Querrichtung 32. Anhand der Sensordaten 3a, 3b berechnet eine Auswertevorrichtung 14 Massendaten, die zumindest eine Masse zumindest eines Teils des Erntegutes 12 kennzeichnen. Daraufhin stellt die Auswertevorrichtung 14 Ertragsdaten 16 bereit, die zumindest auf Basis der Massendaten berechnet sind. Die Ertragsdaten 16 geben zumindest die Masse und/oder einen anhand der Masse berechneten Wert wieder. Gemäß dem in Fig. 7 schematisch dargestellten, erfindungsgemäßen Verfahren zieht die Auswertevorrichtung 14 zur Berechnung der Ertragsdaten 16 hinterlegte Basisdaten 15 insbesondere aus einem Speicher der Auswertevorrichtung 14 heran, welche etwa eine Dichte der Hackfrüchte 22 beinhalten.

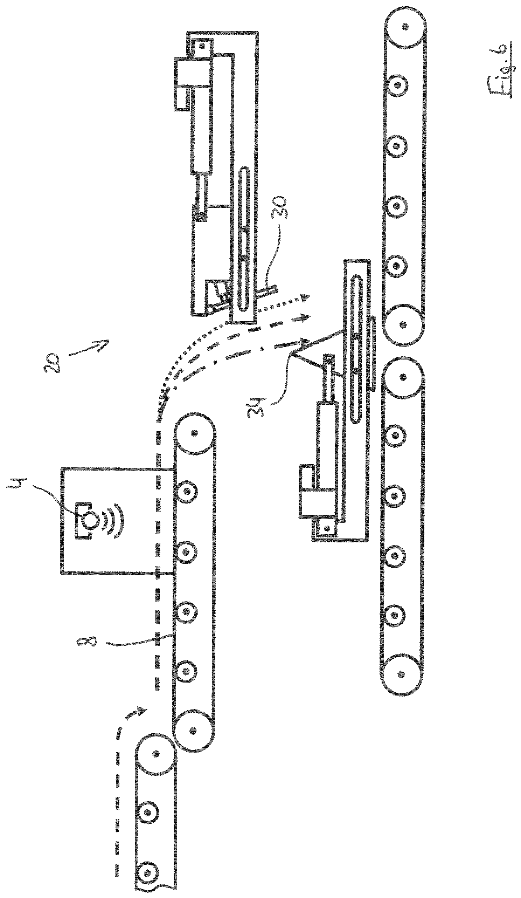

Die Auswertevorrichtung 14 erzeugt außerdem ein Einstellsignal 18 zur Einstellung zumindest eines Trennelementes einer insbesondere von der Hackfruchterntemaschine 2 umfassten Trennvorrichtung 20 (vgl. etwa Fig. 6). Das Einstellsignal 18 wird dabei zumindest auf Basis der Sensordaten (3a, 3b), der Massendaten und/oder der Ertragsdaten 16 erzeugt. Die Trennvorrichtung 20 ist zu einer Trennung eines ersten Teils des Erntegutes 12 vor einem weiteren Teil des Erntegutes 12 ausgebildet, wobei im vorliegenden Beispiel der erste Teil Hackfrüchte 22 und der weitere Teil Beimengungen 24 sind. Zur Berechnung der Ertragsdaten 16 und zur Erzeugung des Einstellsignals 18 nutzt die Auswertevorrichtung 14 Sensordaten 3a, 3b desselben optischen Sensors 4 oder Sensordaten 3a eines ersten optischen Sensors 4 und weitere Sensordaten 3b eines weiteren optischen Sensors 4 (vgl. Fig. 7). Zur Berechnung der Massendaten unterscheidet die Auswertevorrichtung 14 vom Erntegut 12 umfasste Hackfrüchte 22 von vom Erntegut 12 umfassten Beimengungen 24. Außerdem berechnet die Auswertevorrichtung 14 anhand der Sensordaten 3a, 3b eine Anzahl sowie ein Maß der durch den Messbereich 6 bewegten Hackfrüchte 22. Die Auswertevorrichtung 14 berechnet die Ertragsdaten 16 durch eine Zuordnung der Massendaten zu mittels eines nicht dargestellten GPS-Sensors ermittelten Lagedaten.

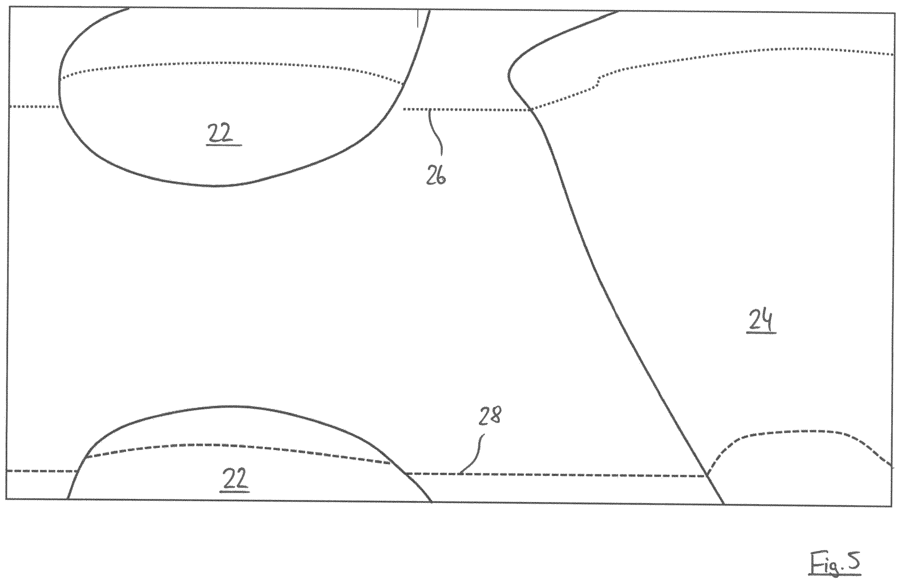

Der Strom von Erntegut 12 wird im Messbereich 6 mittels einer Laservorrichtung entlang zweiter Linien 26, 28 mit Laserlicht bestrahlt (vgl. Fig. 5). Die Linien 26, 28 sind auf Höhe des Förderelementes 8 parallel und verlaufen gradlinig in die horizontale und zur Förderrichtung 10 rechtwinklige Querrichtung 32. Der optische Sensor 4 nimmt vom Strom gestreutes und reflektiertes Licht der Laservorrichtung auf. In Fig. 5 treffen die Linien von 26, 28 je auf eine links angeordnete Hackfrucht 22 und auf eine rechts angeordnete Beimengung 24, welche das Licht auf unterschiedliche Weise streuen und reflektieren.

Die durch das Einstellsignal 18 eingestellte Trennvorrichtung 20 umfasst eine Mehrzahl von Trennelementen, die in die Förderrichtung 10 betrachtet als nebeneinander angeordnete Auswerferelemente 30 ausgebildet sind. Diese Trennelemente sind entlang des Stroms hinter dem Messbereich angeordnet. Die Aktivierung eines der Auswerferelemente 30, die eine Schwenkung des Auswerferelementes 30 von der in Fig. 6 gezeigten Position nach links bedeutet, hängt von einer Position eines identifizierten und zu trennenden Bestandteils des Erntegutes 12 bezogen auf die Querrichtung 32 ab.

Weiterhin vom Einstellsignal abhängig ist die Position eines weiteren Trennelementes, das eine von der Trennvorrichtung 20 umfasste Trennkante 34 ausbildet. Diese wird in Abhängigkeit des Einstellsignals 18 derart horizontal verschoben, dass die intakte Hackfrüchte 22 bei nicht aktivierten Auswerferelementen 30 rechts von der Trennkante 34 landen und Beimengungen 24 von den Auswerferelementen 30 derart umgelenkt werden, dass diese links von der Trennkante 34 landen.

## Patentansprüche

1. Verfahren zum Betrieb einer Hackfruchtfördermaschine, insbesondere einer Hackfruchterntemaschine (2), umfassend die folgenden Schritte:
- Aufnahme von Sensordaten (3a, 3b) mittels zumindest eines optischen Sensors (4), der auf einen Messbereich (6) eines Stroms von durch zumindest ein Förderelement (8) in eine Förderrichtung (10) gefördertem Erntegut (12) gerichtet ist,
- Berechnung von zumindest eine Masse zumindest eines Teils des Erntegutes (12) kennzeichnenden Massendaten durch eine Auswertevorrichtung (14) anhand der Sensordaten,
- Bereitstellung von zumindest auf Basis der Massendaten berechneten Ertragsdaten (16), die zumindest die Masse und/oder einen anhand der Masse berechneten Wert wiedergeben, durch die Auswertevorrichtung (14),
wobei die Auswertevorrichtung (14) zumindest auf Basis der Sensordaten (3a, 3b), der Massendaten und/oder der Ertragsdaten (16) ein Einstellsignal (18) zur Einstellung zumindest eines Trennelementes, das im Betrieb entlang des Stroms vor oder hinter dem Messbereich angeordnet ist und zumindest auf einen Teil des Erntegutes mechanisch einwirkt, einer insbesondere von der Hackfruchtfördermaschine (2) umfassten Trennvorrichtung (20) erzeugt, die zur Trennung eines ersten Teils des Erntegutes (12) von einem weiteren Teil des Erntegutes (12) ausgebildet ist,
**dadurch gekennzeichnet, dass** die Position einer von der Trennvorrichtung (20) umfassten Trennkante (34) zur Trennung von Hackfrüchten (22) und Beimengungen (24) durch das Einstellsignal (18) eingestellt wird.

2. Verfahren nach Anspruch 1, **dadurch gekennzeichnet, dass** die Auswertevorrichtung (14) zur Berechnung der Massendaten und/oder zur Bereitstellung der Ertragsdaten (16) zumindest unter anderem Sensordaten (3a, 3b) desjenigen Sensors (4) benutzt, dessen Sensordaten (3a, 3b) die Auswertevorrichtung (14) auch zur Erzeugung des Einstellsignals (18) benutzt.

3. Verfahren nach einem der vorhergehenden Ansprüche, **dadurch gekennzeichnet, dass** die Auswertevorrichtung (14) zur Berechnung der Massendaten und zur Erzeugung des Einstellsignals (18) vom Erntegut (12) umfasste Hackfrüchte (22) und zumindest einen Teil von vom Erntegut (12) umfassten Beimengungen (24) unterscheidet und insbesondere zumindest einen Anteil der Hackfrüchte (22) oder der Beimengungen (24) am Erntegut (12) berechnet.

4. Verfahren nach einem der vorhergehenden Ansprüche, **dadurch gekennzeichnet, dass** die Auswertevorrichtung (14) zumindest anhand der Sensordaten (3a, 3b) zumindest eine Anzahl von vom Erntegut (12) umfassten Hackfrüchten (22) und/oder zumindest ein Maß zumindest eines Teils der Hackfrüchte (22) berechnet.

5. Verfahren nach einem der vorhergehenden Ansprüche, **dadurch gekennzeichnet, dass** die Auswertevorrichtung (14) das Einstellsignal (18) in Abhängigkeit von eine Eigenschaft, insbesondere eine Größe, zumindest eines Bestandteils des Erntegutes, insbesondere einer Hackfrucht (22), kennzeichnenden und anhand der Sensordaten (3a, 3b) berechneten Eigenschaftsdaten und/oder von einer anhand der Sensordaten (3a, 3b) berechneten Eigenschaftsverteilung der Hackfrüchte (22) erzeugt.

6. Verfahren nach Anspruch 5, **dadurch gekennzeichnet, dass** die Auswertevorrichtung (14) die Ertragsdaten (16) zumindest durch eine Zuordnung der Eigenschaftsdaten oder darauf basierenden Daten oder der Eigenschaftsverteilung oder darauf basierenden Daten zu insbesondere mittels eines GPS-Sensors ermittelten Lage- oder Chargendaten berechnet.

7. Verfahren nach einem der vorhergehenden Ansprüche, **dadurch gekennzeichnet, dass** die Auswertevorrichtung (14) die Ertragsdaten (16) zumindest durch eine Zuordnung der Massendaten oder darauf basierenden Daten zu insbesondere mittels eines GPS-Sensors ermittelten Lage- oder Chargendaten berechnet.

8. Verfahren nach Anspruch 7, **dadurch gekennzeichnet, dass** die Auswertevorrichtung (14) eine Ackerfläche, auf der die Hackfruchtfördermaschine (2) eingesetzt wird, auf Basis der Lagedaten virtuell nachbildet, in insbesondere zumindest teilweise gleich große Flächensektionen unterteilt und jeder Flächensektion zumindest einen Teil der Massendaten oder darauf basierender Daten zuordnet.

9. Verfahren nach einem der vorhergehenden Ansprüche, **dadurch gekennzeichnet, dass** der Strom von Erntegut (12) im Messbereich (6) mittels zumindest einer Laservorrichtung zumindest im Wesentlichen entlang einer Linie (26, 28), deren Haupterstreckungsrichtung angewinkelt zur Förderrichtung (10) angeordnet ist, mit Laserlicht bestrahlt wird und der optische Sensor (4) vom Strom gestreutes und/oder reflektiertes Licht der Laservorrichtung aufnimmt.

10. Verfahren nach Anspruch 9, **dadurch gekennzeichnet, dass** der Strom mittels der Laservorrichtung zumindest im Wesentlichen entlang zumindest zweier insbesondere paralleler Linien (26, 28) mit Laserlicht bestrahlt wird, deren Haupterstreckungsrichtungen jeweils angewinkelt zur Förderrichtung (10) angeordnet sind.

11. Verfahren nach Anspruch 10, **dadurch gekennzeichnet, dass** der Strom entlang einer ersten der Linien (26) mit Laserlicht einer ersten Wellenlänge und entlang einer zweiten der Linien (28) mit Laserlicht einer von der ersten Wellenlänge abweichenden zweiten Wellenlänge bestrahlt wird.

12. Verfahren nach einem der vorhergehenden Ansprüche, **dadurch gekennzeichnet, dass** der optische Sensor (4) zumindest eine monochrome Kamera aufweist, wobei die Sensordaten (3a, 3b) insbesondere Grauwerte und/oder Tiefeninformationen umfassen.

13. Verfahren nach einem der vorstehenden Ansprüche, **dadurch gekennzeichnet, dass** die Auswertevorrichtung (14) anhand von einem ersten Kamerabild zugrundeliegenden Sensordaten (3a, 3b) und von einem zweiten Kamerabild zugrundeliegenden Sensordaten (3a, 3b) zumindest einen Bildabschnitt zumindest eines der Kamerabilder identifiziert, der zumindest einen Teil eines Hintergrundes zeigt, und insbesondere zumindest einen Teil der Sensordaten (3a, 3b) derart modifiziert, dass der Bildabschnitt zumindest teilweise aus dem Kamerabild entfernt wird.

14. Verfahren nach Anspruch 13, **dadurch gekennzeichnet, dass** die Auswertevorrichtung (14) den zumindest einen Bildabschnitt anhand von eine Wegstrecke, die das Förderelement (8) zwischen den Aufnahmen der beiden Kamerabilder in die Förderrichtung (10) zurückgelegt hat, wiedergebenden Wegdaten identifiziert.

15. Verfahren nach einem der vorhergehenden Ansprüche, **dadurch gekennzeichnet, dass** zumindest anhand der Sensordaten (3a, 3b) die Konturen einzelner Hackfrüchte (22) und/oder Beimengungen (24) in zumindest einem Kamerabild des Sensors (4) identifiziert werden und insbesondere anhand von hinterlegten Basisdaten ihr Volumen ermittelt wird.

16. Verfahren nach einem der vorhergehenden Ansprüche unter Einschluss von Anspruch 3, **dadurch gekennzeichnet, dass** die Auswertevorrichtung (14) zumindest anhand der Sensordaten (3a, 3b) zumindest eine Hackfrucht (22) von einer Beimengung (24) zumindest anhand eines Ausmaßes einer Reflektion und/oder einer Rückstreuung des Laserlichts durch die jeweiligen, abgebildeten Oberflächen unterscheidet.

17. Verfahren nach einem der vorhergehenden Ansprüche, **dadurch gekennzeichnet, dass** die Trennvorrichtung (20) relativ zum Messbereich (6) und bezogen auf den Strom von Erntegut (12) stromabwärts angeordnet ist und insbesondere zur Trennung von Beimengungen (24) von Hackfrüchten (22) ausgebildet ist.

18. Verfahren nach einem der vorhergehenden Ansprüche, **dadurch gekennzeichnet, dass** die Auswertevorrichtung das Einstellsignal in Abhängigkeit von einer Position eines identifizierten und zu trennenden Bestandteils, insbesondere einer Beimengung (24), des Erntegutes (12) bezogen auf eine Querrichtung (32) erzeugt.

19. Verfahren nach Anspruch 18, **dadurch gekennzeichnet, dass** durch das Einstellsignal (18) mehrere in Förderrichtung (10) betrachtet nebeneinander angeordnete Auswerferelemente (30) der Trennvorrichtung (20) aktivierbar sind.

20. Verfahren nach einem der vorhergehenden Ansprüche, **dadurch gekennzeichnet, dass** die Trennkante (34) auf eine vertikale Richtung bezogen unterhalb der Auswerferelemente (30) angeordnet ist.

21. Verfahren nach einem der vorhergehenden Ansprüche, **dadurch gekennzeichnet, dass** die Auswertevorrichtung (14) die Ertragsdaten (16) zumindest auf Basis von Betriebskenndaten der Hackfruchtfördermaschine (2), insbesondere auf Basis von einer Fahrgeschwindigkeit und/oder einer Position von Rodescharen der Hackfruchtfördermaschine (2), berechnet.

22. Verfahren nach einem der vorhergehenden Ansprüche, **dadurch gekennzeichnet, dass** das Förderelement (8) eine Mehrzahl von zumindest abschnittsweise tiefergelegenen Hackfruchtaufnahmebereichen ausbildet, die sowohl in die Förderrichtung (10) als auch in der Querrichtung (32) durch Trennelemente des Förderelementes (8) voneinander abgegrenzt sind.

23. Hackfruchtfördermaschine, insbesondere Hackfruchterntemaschine (2), aufweisend zumindest ein Förderelement (8), einen optischen Sensor (4) und eine Auswertevorrichtung (14), **gekennzeichnet durch** eine Ausbildung zur Durchführung des Verfahrens nach einem der vorhergehenden Ansprüche.

## Claims

1. Method for operating a root crop conveying machine, in particular a root crop harvester (2), comprising the following steps:
- recording sensor data (3a, 3b) by means of at least one optical sensor (4), which is directed to a measurement region (6) of a flow of harvested material (12) conveyed by at least one conveying element (8) in a conveying direction (10),
- calculating mass data characterizing at least a mass of at least a part of the harvested material (12) by an evaluation device (14) on the basis of the sensor data,
- providing, by the evaluation device (14), yield data (16) calculated at least on the basis of the mass data and reflecting at least the mass and/or a value calculated on the basis of the mass,
wherein the evaluation device (14), at least on the basis of the sensor data (3a, 3b), the mass data and/or the yield data (16), generates an adjustment signal (18) for adjusting at least one separating element, which in operation is arranged along the flow in front of or behind the measurement region and acts mechanically on at least a part of the harvested material, of a separating device (20) which is in particular comprised by the root crop conveying machine (2) and is designed for separating a first part of the harvested material (12) from a further part of the harvested material (12),
**characterized in that**
the position of a separating edge (34) comprised by the separating device (20) for separating root crops (22) and admixtures (24) is adjusted by the adjustment signal (18).

2. Method according to Claim 1, **characterized in that** the evaluation device (14) uses for the calculation of the mass data and/or for the provision of the yield data (16) at least, among other things, sensor data (3a, 3b) of that sensor (4) whose sensor data (3a, 3b) the evaluation device (14) also uses for the generation of the adjustment signal (18).

3. Method according to one of the preceding claims, **characterized in that** the evaluation device (14) for calculating the mass data and for generating the adjustment signal (18) distinguishes between root crops (22) comprised by the harvested material (12) and at least some of the admixtures (24) comprised by the harvested material (12) and calculates in particular at least a proportion of the root crops (22) or of the admixtures (24) in the harvested material (12).

4. Method according to one of the preceding claims, **characterized in that** the evaluation device (14), at least on the basis of the sensor data (3a, 3b), calculates at least a number of root crops (22) comprised by the harvested material (12)
and/or at least one dimension of at least part of the root crops (22).

5. Method according to one of the preceding claims, **characterized in that** the evaluation device (14) generates the adjustment signal (18) in dependence on property data characterizing a property, in particular a size, of at least one component of the harvested material, in particular a root crop (22), and calculated on the basis of the sensor data (3a, 3b), and/or in dependence on a property distribution of the root crops (22) calculated on the basis of the sensor data (3a, 3b).

6. Method according to Claim 5, **characterized in that** the evaluation device (14) calculates the yield data (16) at least by assigning the property data or data based thereon or the property distribution or data based thereon to position or batch data determined in particular by means of a GPS sensor.

7. Method according to one of the preceding claims, **characterized in that** the evaluation device (14) calculates the yield data (16) at least by assigning the mass data or data based thereon to position or batch data determined in particular by means of a GPS sensor.

8. Method according to Claim 7, **characterized in that** the evaluation device (14) virtually reproduces a field area on which the root crop conveying machine (2) is used on the basis of the position data, subdivides it into area sections that are, in particular, at least partially of the same size and assigns at least a part of the mass data or data based thereon to each area section.

9. Method according to one of the preceding claims, **characterized in that** the flow of harvested material (12) in the measurement region (6) is irradiated with laser light by means of at least one laser device at least substantially along a line (26, 28), the main direction of extent of which is arranged at an angle to the conveying direction (10), and the optical sensor (4) records light of the laser device scattered and/or reflected by the flow.

10. Method according to Claim 9, **characterized in that** the flow is irradiated with laser light by means of the laser device at least substantially along at least two, in particular parallel, lines (26, 28), the main directions of extent of which are each arranged at an angle to the conveying direction (10).

11. Method according to Claim 10, **characterized in that** the flow is irradiated along a first of the lines (26) with laser light of a first wavelength and along a second of the lines (28) with laser light of a second wavelength different from the first wavelength.

12. Method according to one of the preceding claims, **characterized in that** the optical sensor (4) has at least one monochrome camera, wherein the sensor data (3a, 3b) include in particular grey values and/or depth information.

13. Method according to one of the preceding claims, **characterized in that** the evaluation device (14) identifies, on the basis of sensor data (3a, 3b) forming the basis of a first camera image and sensor data (3a, 3b) forming the basis of a second camera image, at least one image portion of at least one of the camera images that shows at least part of a background, and in particular modifies at least part of the sensor data (3a, 3b) in such a way that the image portion is at least partially removed from the camera image.

14. Method according to Claim 13, **characterized in that** the evaluation device (14) identifies the at least one image portion on the basis of path data representing a path distance that the conveying element (8) has travelled in the conveying direction (10) between the recordings of the two camera images.

15. Method according to one of the preceding claims, **characterized in that**, at least on the basis of the sensor data (3a, 3b), the contours of individual root crops (22) and/or admixtures (24) are identified in at least one camera image of the sensor (4) and in particular their volume is determined on the basis of stored basic data.

16. Method according to one of the preceding claims, including Claim 3, **characterized in that**, at least on the basis of the sensor data (3a, 3b), the evaluation device (14) distinguishes at least one root crop (22) from an admixture (24) at least on the basis of an extent of a reflection and/or a backscattering of the laser light by the respective imaged surfaces.

17. Method according to one of the preceding claims, **characterized in that** the separating device (20) is arranged downstream relative to the measurement region (6) and in relation to the flow of harvested material (12) and is designed in particular to separate admixtures (24) from root crops (22).

18. Method according to one of the preceding claims, **characterized in that** the evaluation device generates the adjustment signal in dependence on a position of an identified component to be separated, in particular an admixture (24), of the harvested material (12) with respect to a transverse direction (32).

19. Method according to Claim 18, **characterized in that** a plurality of ejector elements (30) of the separating device (20), which are arranged next to each other as viewed in the conveying direction (10), can be activated by the adjustment signal (18).

20. Method according to one of the preceding claims, **characterized in that** the separating edge (34) is arranged, in relation to a vertical direction, below the ejector elements (30).

21. Method according to one of the preceding claims, **characterized in that** the evaluation device (14) calculates the yield data (16) at least on the basis of operating characteristic data of the root crop conveying machine (2), in particular on the basis of a travel speed and/or a position of share blades of the root crop conveying machine (2).

22. Method according to one of the preceding claims, **characterized in that** the conveying element (8) forms a plurality of root crop receiving regions which are located at least in portions at a lower level and which are delimited from one another both in the conveying direction (10) and in the transverse direction (32) by separating elements of the conveying element (8).

23. Root crop conveying machine, in particular root crop harvester (2), comprising at least one conveying element (8), an optical sensor (4) and an evaluation device (14), **characterized by** a design for carrying out the method according to one of the preceding claims.

## Revendications

1. Procédé pour faire fonctionner une machine de transport de plantes sarclées, en particulier une machine de récolte de plantes sarclées (2), comprenant les étapes suivantes :
- enregistrement de données de capteur (3a, 3b) au moyen d'au moins un capteur optique (4), qui est dirigé sur une zone de mesure (6) d'un flux de produit récolté (12) transporté par au moins un élément de transport (8) dans une direction de transport (10),
- calcul de données de masse caractérisant au moins une masse d'au moins une partie du produit récolté (12) par un dispositif d'évaluation (14) à l'aide des données des capteur,
- fourniture de données de rendement (16), calculées au moins sur la base des données de masse, qui représentent au moins la masse et/ou une valeur calculée à l'aide de la masse, par le dispositif d'évaluation (14),
le dispositif d'évaluation (14) générant, au moins sur la base des données de capteur (3a, 3b), des données de masse et/ou des données de rendement (16), un signal de réglage (18) destiné à régler au moins un élément de séparation qui, en fonctionnement, est disposé le long du flux en amont ou en aval de la zone de mesure et agit mécaniquement sur au moins une partie du produit récolté, d'un dispositif de séparation (20) contenu en particulier dans la machine de transport de plantes sarclées (2), qui est formé pour séparer une première partie du produit récolté (12) d'une autre partie du produit récolté (12), **caractérisé en ce que**
la position d'une arête de séparation (34) contenue dans le dispositif de séparation (20) est réglée par le signal de réglage (18) pour séparer des plantes sarclées (22) et des mélanges ajoutés (24).

2. Procédé selon la revendication 1, **caractérisé en ce que** le dispositif d'évaluation (14) utilise, pour calculer les données de masse et/ou pour fournir les données de rendement (16), au moins entre autres des données de capteur (3a, 3b) dudit capteur (4), des données de capteur (3a, 3b) duquel précisément le dispositif d'évaluation (14) utilise également pour générer le signal de réglage (18).

3. Procédé selon l'une des revendications précédentes, **caractérisé en ce que** le dispositif d'évaluation (14), pour le calcul des données de masse et pour la génération du signal de réglage (18), distingue des plantes sarclées (22) contenues dans le produit récolté (12) et au moins une partie des mélanges ajoutés (24) contenus dans le produit récolté (12) et calcule en particulier au moins une proportion des plantes sarclées (22) ou des mélanges ajoutés (24) sur le produit récolté (12).

4. Procédé selon l'une des revendications précédentes, **caractérisé en ce que** le dispositif d'évaluation (14) calcule, au moins à l'aide des données de capteur (3a, 3b), au moins un certain nombre de plantes sarclées (22) contenues dans le produit récolté (12)
et/ou au moins une mesure d'au moins une partie des plantes sarclées (22).

5. Procédé selon l'une des revendications précédentes, **caractérisé en ce que** le dispositif d'évaluation (14) génère le signal de réglage (18) en fonction de données de propriétés caractérisant une propriété, en particulier une taille, d'au moins un composant du produit récolté, en particulier d'une plante sarclée (22), et calculées à l'aide des données de capteur (3a, 3b) et/ou d'une répartition de propriétés des plantes sarclées (22) calculée à l'aide des données de capteur (3a, 3b).

6. Procédé selon la revendication 5, **caractérisé en ce que** le dispositif d'évaluation (14) calcule les données de rendement (16) au moins en associant les données de propriété ou les données basées sur celles-ci ou la répartition de propriétés ou les données basées sur celles-ci à des données de localisation ou de lot déterminées en particulier au moyen d'un capteur GPS.

7. Procédé selon l'une des revendications précédentes, **caractérisé en ce que** le dispositif d'évaluation (14) calcule les données de rendement (16) au moins en associant les données de masse ou les données basées sur celles-ci à des données de position ou de lot déterminées en particulier au moyen d'un capteur GPS.

8. Procédé selon la revendication 7, **caractérisé en ce que** le dispositif d'évaluation (14) simule virtuellement une surface de champ, sur laquelle la machine de transport de plantes sarclées (2) est utilisée, sur la base des données de position, la subdivise en tronçons de surface en particulier au moins en partie de même taille et associe à chaque tronçon de surface au moins une partie des données de masse ou des données basées sur celles-ci.

9. Procédé selon l'une des revendications précédentes, **caractérisé en ce que** le flux de produit récolté (12) dans la zone de mesure (6) est irradié par une lumière laser au moins sensiblement le long d'une ligne (26, 28), dont la direction d'extension principale est disposée de manière inclinée par rapport à la direction de transport (10), au moyen d'au moins un dispositif laser, et le capteur optique (4) reçoit la lumière du dispositif laser diffusée et/ou réfléchie par le flux.

10. Procédé selon la revendication 9, **caractérisé en ce que** le flux est irradié par une lumière laser au moins sensiblement le long d'au moins deux lignes (26, 28), en particulier parallèles, au moyen du dispositif laser, dont les directions d'extension principales sont disposées chacune de manière inclinée par rapport à la direction de transport (10).

11. Procédé selon la revendication 10, **caractérisé en ce que** le flux est irradié par une lumière laser d'une deuxième longueur d'onde le long d'une première des lignes (26) et par une lumière laser d'une deuxième longueur d'onde divergeant de la première longueur d'onde le long d'une deuxième des lignes (28).

12. Procédé selon l'une des revendications précédentes, **caractérisé en ce que** le capteur optique (4) comporte au moins une caméra monochrome, les données de capteur (3a, 3b) comprenant en particulier des valeurs de niveaux de gris et/ou des informations de profondeur.

13. Procédé selon l'une des revendications précédentes, **caractérisé en ce que** le dispositif d'évaluation (14) identifie à l'aide de données de capteur (3a, 3b) sous-jacentes à une première image de caméra et de données de capteur (3a, 3b) sous-jacentes à une deuxième image de caméra, au moins une section d'image d'au moins une des images de caméra, qui affiche au moins une partie d'un arrière-plan, et modifie en particulier au moins une partie des données de capteur (3a, 3b) de telle manière que la section d'image est au moins en partie supprimée de l'image de caméra.

14. Procédé selon la revendication 13, **caractérisé en ce que** le dispositif d'évaluation (14) identifie l'au moins une section d'image à l'aide de données de trajet reproduisant une distance, que l'élément de transport (8) a parcourue entre les enregistrements des deux images de caméra dans la direction de transport (10).

15. Procédé selon l'une des revendications précédentes, **caractérisé en ce que** les contours de plantes sarclées (22) individuelles et/ou de mélanges ajoutés (24) sont identifiés dans au moins une image de caméra du capteur (4) à l'aide des données de capteur (3a, 3b) et en particulier leur volume est déterminé à l'aide de données de base mémorisées.

16. Procédé selon l'une des revendications précédentes, y compris la revendication 3, **caractérisé en ce que** le dispositif d'évaluation (14) distingue au moins une plante sarclée (22) d'un mélange ajouté (24) au moins à l'aide des données de capteur (3a, 3b) au moins à l'aide de l'ampleur d'une réflexion et/ou d'une rétrodiffusion de la lumière laser à travers les surfaces reproduites respectives.

17. Procédé selon l'une des revendications précédentes, **caractérisé en ce que** le dispositif de séparation (20) est disposé en aval par rapport à la zone de mesure (6) et par rapport au flux de produit récolté (12) et est formé en particulier pour séparer des mélanges ajoutés (24) de plantes sarclées (22).

18. Procédé selon l'une des revendications précédentes, **caractérisé en ce que** le dispositif d'évaluation génère le signal de réglage en fonction d'une position d'un composant identifié et à séparer, en particulier d'un mélange ajouté (24), du produit récolté (12) par rapport à une direction transversale (32).

19. Procédé selon la revendication 18, **caractérisé en ce que** plusieurs éléments éjecteurs (30) du dispositif de séparation (20) disposés côte à côte vus dans la direction de transport (10) peuvent être activés par le signal de réglage (18).

20. Procédé selon l'une des revendications précédentes, **caractérisé en ce que** l'arête de séparation (34) est disposée en dessous des éléments éjecteurs (30) par rapport à une direction verticale.

21. Procédé selon l'une des revendications précédentes, **caractérisé en ce que** le dispositif d'évaluation (14) calcule les données de rendement (16) au moins sur la base de données caractéristiques de fonctionnement de la machine de transport de plantes sarclées (2), en particulier sur la base d'une vitesse de déplacement et/ou d'une position de socs de la machine de transport de plantes sarclées (2).

22. Procédé selon l'une des revendications précédentes, **caractérisé en ce que** l'élément de transport (8) forme une multitude de zones de réception de plantes sarclées situées au moins par sections en profondeur, qui sont délimitées les unes des autres aussi bien dans la direction de transport (10) que dans la direction transversale (32) par des éléments de séparation de l'élément de transport (8).

23. Machine de transport de plantes sarclées, en particulier machine de récolte de plantes sarclées (2), comportant au moins un élément de transport (8), un capteur optique (4) et un dispositif d'évaluation (14), **caractérisée par** une forme de réalisation pour la mise en œuvre du procédé selon l'une des revendications précédentes.
